# EUROPEAN PATENT APPLICATION

(11) **EP 4 693 797 A1**
(43) Date of publication of application: **11.02.2026**
(21) Application number: 23929869.8
(22) Date of filing: 28.09.2023
(51) Int. Cl.: H02J 7/00

(54) **CHARGE-DISCHARGE CIRCUIT, CONNECTING ASSEMBLY AND CHARGE-DISCHARGE SYSTEM**

(30) Priority: 30.03.2023 CN 202320742825 U
(71) Applicant: BYD Company Limited, Shenzhen, Guangdong 518118 (CN)
(72) Inventor: WU, Sinian, Shenzhen, Guangdong 518118 (CN); DANG, Yuyue, Shenzhen, Guangdong 518118 (CN); SHI, Lei, Shenzhen, Guangdong 518118 (CN); LUO, Jianxing, Shenzhen, Guangdong 518118 (CN); WANG, Haidong, Shenzhen, Guangdong 518118 (CN)
(74) Representative: Mathys & Squire
(86) International application number: PCT/CN2023/122887
(87) International publication number: WO 2024/198295

(57) **Abstract**

A charging/discharging circuit, a connection assembly including the charging/discharging circuit, and a charging/discharging system including the connection assembly are provided. The charging/discharging circuit includes a connection circuit and a temperature switch. The connection circuit is separately connected to a discharging circuit and a charging circuit, and is configured to transmit electrical energy in a state in which the discharging circuit and the charging circuit are connected. The temperature switch is disposed on the connection circuit, and is configured to control connection/disconnection of the connection circuit.

## Description

### CROSS-REFERENCE TO RELATED APPLICATIONS

This disclosure is based on and claims priority to Chinese Patent Application No. 2023207428255, filed on March 30, 2023 and entitled "CHARGING/DISCHARGING CIRCUIT, CONNECTION ASSEMBLY, AND CHARGING/DISCHARGING SYSTEM", which is incorporated herein by reference in its entirety.

### TECHNICAL FIELD

This disclosure relates to the field of charging/discharging technologies, and in particular, to a charging/discharging circuit, a connection assembly, and a charging/discharging system.

### BACKGROUND

In a charging process, to ensure charging safety, an over-temperature protection function is usually set to stop charging when a temperature is excessively high. Currently, in most over-temperature protection functions, temperature detection elements are used to transmit high-temperature signals through a plurality of lines. When the temperature detection elements or any transmission line fails, over-temperature protection cannot be implemented. Therefore, there is a relatively high risk of failure in existing charging over-temperature protection functions.

### SUMMARY

This disclosure is intended to resolve at least one of technical problems in the conventional technology. Therefore, this disclosure provides a charging/discharging circuit, a connection assembly, and a charging/discharging system. There are relatively fewer failure points, and therefore the reliability of the over-temperature protection function is relatively high.

According to a first aspect, this disclosure provides a charging/discharging circuit, including: a connection circuit, separately connected to a discharging circuit and a charging circuit, and configured to transmit electrical energy in a state in which the discharging circuit and the charging circuit are connected; and a temperature switch, disposed on the connection circuit, and configured to disconnect or connect the connection circuit based on a temperature.

According to the charging/discharging circuit in this disclosure, the temperature switch is disposed on the connection circuit, to automatically disconnect the connection circuit when a charging temperature is excessively high, so as to stop transmission of electrical energy. Because only a small number of components are required for implementing the over-temperature protection function, there are relatively fewer failure points, and therefore the reliability of the over-temperature protection function is relatively high.

According to an embodiment of this disclosure, the connection circuit includes a control guide sub-circuit, configured to be separately connected to connection confirmation terminals of the discharging circuit and the charging circuit, to determine whether the charging circuit and the discharging circuit are connected. The temperature switch is disposed on the control guide sub-circuit, and is configured to control connection/disconnection of the control guide sub-circuit.

According to an embodiment of this disclosure, the control guide sub-circuit includes a first resistor. A first terminal of the first resistor is connected to a first connection confirmation terminal of the charging circuit, and a second terminal of the first resistor is connected to a second connection confirmation terminal of the discharging circuit. The temperature switch is connected to the first resistor in series. The first connection confirmation terminal of the charging circuit is connected to a ground terminal of the charging circuit through a second resistor, and the second connection confirmation terminal of the discharging circuit is connected to a pull-up power supply of the discharging circuit through a third resistor.

According to an embodiment of this disclosure, the control guide sub-circuit further includes a fourth resistor. A first terminal of the fourth resistor is connected to the second connection confirmation terminal of the discharging circuit, and a second terminal of the fourth resistor is connected to a ground terminal of the discharging circuit.

According to an embodiment of this disclosure, the control guide sub-circuit further includes a fifth resistor. A first terminal of the fifth resistor is connected to a third connection confirmation terminal of the charging circuit, and a second terminal of the fifth resistor is connected to the ground terminal of the charging circuit.

According to an embodiment of this disclosure, the control guide sub-circuit further includes a mechanical switch, connected to the first resistor in series.

According to an embodiment of this disclosure, the connection circuit includes a signal transmission sub-circuit, separately connected to signal transmission terminals of the discharging circuit and the charging circuit, and configured to transmit a communication signal to implement communication between the discharging circuit and the charging circuit. The temperature switch is disposed on the signal transmission sub-circuit, and is configured to control connection/disconnection of the signal transmission sub-circuit.

According to an embodiment of this disclosure, the signal transmission sub-circuit includes a plurality of CAN signal lines, and two ends are respectively connected to CAN signal transmission terminals of the discharging circuit and the charging circuit. The temperature switch is disposed on any one of the CAN signal lines.

According to a second aspect, this disclosure provides a connection assembly. The connection assembly includes a cable, a first plug, and a second plug. Two ends of the cable are respectively connected to the first plug and the second plug to form the charging/discharging circuit according to any one of the foregoing embodiments. A temperature switch is packaged into the first plug or the second plug. The first plug is plugged into a discharging device, and the second plug is plugged into a charging device. The discharging device includes a discharging circuit, and the charging device includes a charging circuit.

According to the connection assembly in this disclosure, the temperature switch is disposed on a connection circuit, to automatically disconnect the connection circuit when a charging temperature is excessively high, so as to stop transmission of electrical energy. Because only a small number of components are required for implementing the over-temperature protection function, there are relatively fewer failure points, and therefore the reliability of the over-temperature protection function is relatively high.

According to a third aspect, this disclosure provides a charging/discharging system, including a discharging vehicle, a charging vehicle, and the connection assembly according to the foregoing embodiment. The discharging vehicle includes a discharging circuit, and the discharging circuit is connected to a charging/discharging circuit. The charging vehicle includes a charging circuit, and the charging circuit is connected to the charging/discharging circuit.

According to an embodiment of this disclosure, the discharging circuit includes a controller, a detection terminal of the controller is connected to the charging/discharging circuit, and the controller is configured to: when the detection terminal is in a first state, control the discharging circuit to discharge electricity externally; when the detection terminal is in a second state, control the discharging circuit to stop discharging electricity externally; and when the detection terminal is in a third state, control the discharging circuit to maintain a state of not discharging electricity externally. When the detection terminal is in the first state, a temperature switch is turned on. When the detection terminal is in the second state or the third state, the temperature switch is turned off.

According to an embodiment of this disclosure, a voltage value of the detection terminal in the first state is less than a voltage value in the second state, and the voltage value of the detection terminal in the second state is less than a voltage value in the third state.

According to the charging/discharging system in this disclosure, the temperature switch is disposed on a connection circuit, to automatically disconnect the connection circuit when a charging temperature is excessively high, so as to stop the transmission of electrical energy. Because only a small number of components are required for implementing the over-temperature protection function, there are relatively fewer failure points, and therefore the reliability of the over-temperature protection function is relatively high.

Additional aspects and advantages of this disclosure are partially provided in the following descriptions, and partially become clear from the following descriptions, or are understood through practice of this disclosure.

### BRIEF DESCRIPTION OF DRAWINGS

The foregoing and/or additional aspects and advantages of this disclosure become clear and are easy to understand from the descriptions of embodiments provided with reference to the following accompanying drawings.
FIG. 1 is a first schematic structural diagram of a charging/discharging circuit according to an embodiment of this disclosure;
FIG. 2 is a second schematic structural diagram of a charging/discharging circuit according to an embodiment of this disclosure;
FIG. 3 is a third schematic structural diagram of a charging/discharging circuit according to an embodiment of this disclosure;

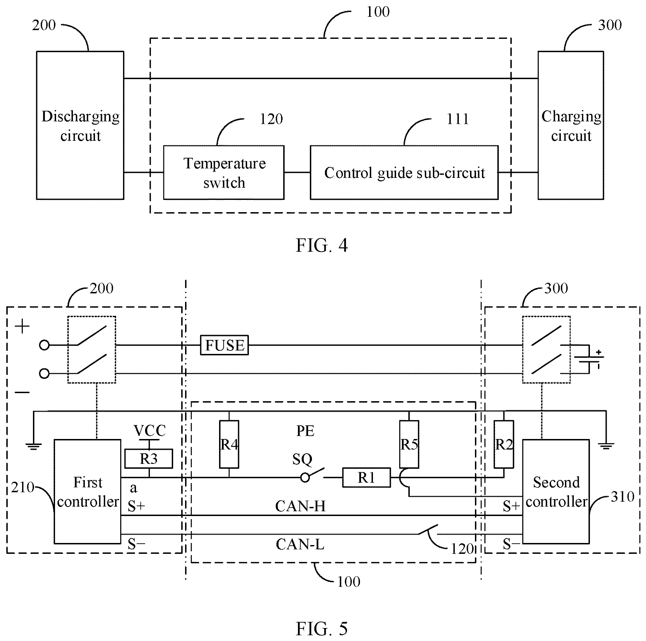

FIG. 4 is a fourth schematic structural diagram of a charging/discharging circuit according to an embodiment of this disclosure;
FIG. 5 is a fifth schematic structural diagram of a charging/discharging circuit according to an embodiment of this disclosure; and
FIG. 6 is a schematic structural diagram of a connection assembly according to an embodiment of this disclosure.

### Reference numerals:

100: charging/discharging circuit; 110: connection circuit; 111: control guide sub-circuit; 112: signal transmission sub-circuit; 120: temperature switch;
200: discharging circuit; 210: first controller; 300: charging circuit; 310: first controller; 400: cable; 500: first plug; 600: second plug;
PE: ground wire; R1 to R5: first resistor to fifth resistor; VCC: pull-up power supply; SQ: controlled switch; and FUSE: fuse.

### DESCRIPTION OF EMBODIMENTS

The following describes in detail embodiments of this disclosure. Examples of the embodiments are shown in the accompanying drawings, and same or similar reference numerals represent same or similar elements or elements having same or similar functions. The embodiments described below with reference to the accompanying drawings are examples, are merely intended to explain this disclosure, and cannot be understood as a limitation on this disclosure.

In a related technology, a charging gun is configured to connect a discharging device and a charging device, and transmit electrical energy output by the discharging device to the charging device, to charge the charging device. In over-temperature detection within the charging gun, a high-temperature signal is transmitted to the discharging device and the charging device through a thermistor. Transmission of the high-temperature signal requires three temperature control lines: T+, T-, and T common. Therefore, when any temperature control line or the thermistor fails, over-temperature protection cannot be implemented.

Therefore, this disclosure provides a charging/discharging circuit, a connection assembly, and a charging/discharging system. There are relatively fewer failure points, and therefore the reliability of the over-temperature protection function is relatively high.

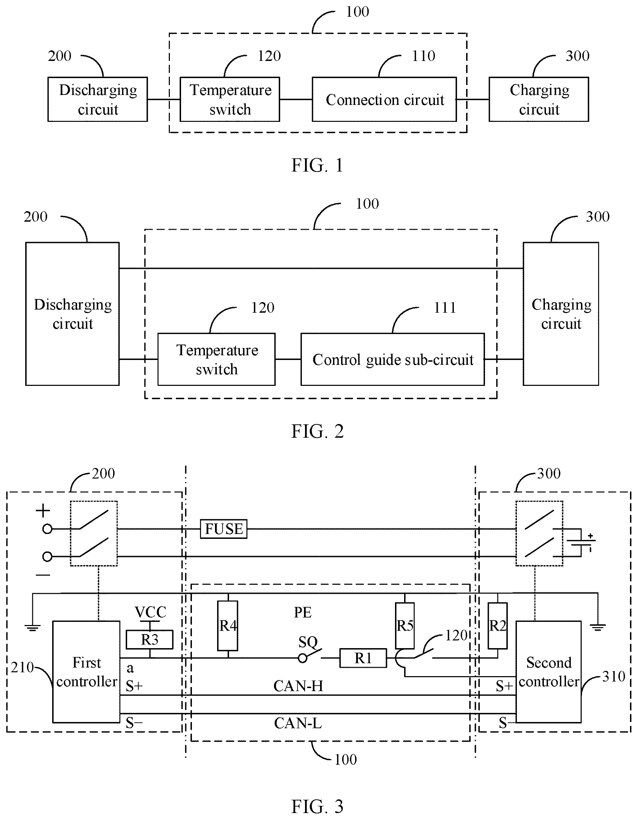

With reference to FIG. 1, an embodiment of this disclosure provides a charging/discharging circuit 100.

In this implementation, the charging/discharging circuit 100 includes a connection circuit 110 and a temperature switch 120. The connection circuit 110 is separately connected to a discharging circuit 200 and a charging circuit 300, and is configured to transmit electrical energy in a state in which the discharging circuit 200 and the charging circuit 300 are connected. The temperature switch 120 is disposed on the connection circuit 110, and is configured to control connection/disconnection of the connection circuit 110.

In some embodiments, the discharging circuit 200 may include elements, for example, a generator and a controller, for generating electrical energy. The charging circuit 300 may include elements, for example, a battery, for storing electrical energy. The electrical energy is transmitted to the charging circuit 300 through the connection circuit 110, and the charging circuit 300 is charged by using the electrical energy.

The temperature switch 120 is an element that senses a temperature to perform an action. When the temperature sensed by the temperature switch 120 rises to an operating temperature value, the temperature switch 120 is turned off to cut off the connection circuit 110. In addition, when the sensed temperature falls below the operating temperature value, the temperature switch 120 is turned on to connect the connection circuit 110.

In some embodiments, the connection circuit 110 may include a power transmission line, and two ends of the power transmission line are respectively connected to the discharging circuit 200 and the charging circuit 300 for transmitting electrical energy. The temperature switch 120 is disposed on the power transmission line. When the temperature switch 120 is turned on, two sides of the power transmission line are connected, and electrical energy is transmitted from the discharging circuit 200 to the charging circuit 300. When the temperature switch 120 is turned off, the two sides of the power transmission line are disconnected, and no electrical energy can be transmitted.

In some embodiments, the connection circuit 110 may include a power transmission line and a signal line, and two ends of each of the power transmission line and the signal line are connected to the discharging circuit 200 and the charging circuit 300. The power transmission line is configured to transmit electrical energy, and the signal line is configured to transmit a signal. When receiving a signal from the signal line, the discharging circuit 200 transmits electrical energy to the power transmission line. The temperature switch 120 is disposed on the signal line. When the temperature switch 120 is turned on, the discharging circuit 200 may receive a signal, the discharging circuit 200 transmits electrical energy to the power transmission line, and the electrical energy is transmitted to the charging circuit 300 through the power transmission line. When the temperature switch 120 is turned off, the discharging circuit 200 cannot receive a signal, and the discharging circuit 200 stops transmitting electrical energy to the power transmission line. The signal may be a connection confirmation signal, a CAN signal, a 485 signal, or the like.

According to the charging/discharging circuit 100 in this disclosure, the temperature switch 120 is disposed on the connection circuit 110, to automatically disconnect the connection circuit 110 when a charging temperature is excessively high, so as to stop transmission of electrical energy. Because only a small number of components are required for implementing the over-temperature protection function, there are relatively fewer failure points, and therefore the reliability of the over-temperature protection function is relatively high.

With reference to FIG. 2, in some embodiments, the connection circuit 110 includes a control guide sub-circuit 111. The control guide sub-circuit 111 is configured to be separately connected to connection confirmation terminals of the discharging circuit 200 and the charging circuit 300, to determine whether the charging circuit 300 and the discharging circuit 200 are connected. The temperature switch 120 is disposed on the control guide sub-circuit 111, and is configured to control connection/disconnection of the control guide sub-circuit 111.

When the control guide sub-circuit 111 is connected to the connection confirmation terminals of both the discharging circuit 200 and the charging circuit 300, the connection confirmation terminal of the discharging circuit 200 may be set to a first state. When the connection confirmation terminal of the discharging circuit 200 is in the first state, it is determined that the charging circuit 300 and the discharging circuit 200 are connected.

When the control guide sub-circuit 111 is connected to the connection confirmation terminal of the discharging circuit 200 and not connected to the connection confirmation terminal of the charging circuit 300, the connection confirmation terminal of the discharging circuit 200 is set to a second state. When the control guide sub-circuit 111 is not connected to the connection confirmation terminal of the discharging circuit 200, the connection confirmation terminal of the discharging circuit 200 is set to a third state. When the connection confirmation terminal of the discharging circuit 200 is in the second state or the third state, it is determined that the charging circuit 300 and the discharging circuit 200 are not connected.

In this implementation, when the temperature switch 120 is turned on, the control guide sub-circuit 111 is connected. In this case, if the control guide sub-circuit 111 is connected to the connection confirmation terminals of both the discharging circuit 200 and the charging circuit 300, the connection confirmation terminal of the discharging circuit 200 is set to the first state. When the temperature switch 120 is turned off, the control guide sub-circuit 111 is disconnected. In this case, even if the control guide sub-circuit 111 is connected to the connection confirmation terminals of both the discharging circuit 200 and the charging circuit 300, the connection confirmation terminal of the discharging circuit 200 is set to the second state.

In some embodiments, the charging/discharging circuit 100 further includes a power transmission line. The discharging circuit 200 is connected to the charging circuit 300 through the power transmission line and the control guide sub-circuit 111. When the connection confirmation terminal of the discharging circuit 200 is set to the first state, electrical energy is output to the power transmission line, and the electrical energy is transmitted to the charging circuit 300 through the power transmission line.

With reference to FIG. 3, the control guide sub-circuit 111 includes a first resistor R1. A first terminal of the first resistor R1 is connected to a first connection confirmation terminal of the charging circuit 300, and a second terminal of the first resistor R1 is connected to a second connection confirmation terminal of the discharging circuit 200. The temperature switch 120 is connected to the first resistor R1 in series. The first connection confirmation terminal of the charging circuit 300 is connected to a ground terminal of the charging circuit 300 through a second resistor R2, and the second connection confirmation terminal of the discharging circuit 200 is connected to a pull-up power supply of the discharging circuit through a third resistor R3.

In some embodiments, the discharging circuit 200 includes a first controller 210, and the charging circuit 300 includes a second controller 310. The second connection confirmation terminal of the discharging circuit 200 is a port 'a' of the first controller 210.

The port a is connected to the pull-up power supply VCC through the third resistor R3. The port a has a relatively high voltage, for example, 12 V, and is in the third state in this case. In this case, it is considered that the second connection confirmation terminal of the discharging circuit 200 is not connected to the control guide sub-circuit 111, or the temperature switch 120 is turned off. Therefore, a state of currently not discharging electricity externally by the discharging circuit 200 is maintained.

In some embodiments, the control guide sub-circuit 111 further includes a fourth resistor R4. A first terminal of the fourth resistor R4 is connected to the second connection confirmation terminal of the discharging circuit 200, and a second terminal of the fourth resistor R4 is connected to a ground terminal of the discharging circuit 200.

When the pull-up power supply VCC is grounded through the third resistor R3, the first resistor R1, the second resistor R2, and the fourth resistor R4, the port a has a relatively low voltage, for example, 7 V, and is in the first state in this case. In this case, it is considered that the control guide sub-circuit 111 is connected to both the first connection confirmation terminal of the charging circuit 300 and the second connection confirmation terminal of the discharging circuit 200, the temperature switch 120 is turned on, and the connection circuit is connected. Therefore, the discharging circuit 200 is controlled or maintained to discharge electricity externally.

When the pull-up power supply VCC is grounded through the third resistor R3 and the fourth resistor R4, the port a has a moderate voltage, for example, 9 V, and is in the second state in this case. In this case, it is considered that the control guide sub-circuit 111 is half-connected to the second connection confirmation terminal of the discharging circuit 200, or the control guide sub-circuit 111 is connected to the second connection confirmation terminal of the discharging circuit 200, but the temperature switch 120 is turned off. Therefore, the discharging circuit 200 is controlled to stop discharging electricity externally.

In some embodiments, the control guide sub-circuit further includes a fifth resistor R5. A first terminal of the fifth resistor R5 is connected to a third connection confirmation terminal of the charging circuit 300, and a second terminal of the fifth resistor R5 is connected to the ground terminal of the charging circuit 300.

The fifth resistor R5 may be used by the second controller 310 to determine whether the first connection confirmation terminal of the charging circuit 300 is connected to the control guide sub-circuit 111. When the first connection confirmation terminal of the charging circuit 300 is connected to the control guide sub-circuit 111, the third connection confirmation terminal of the charging circuit 300 is grounded through the fifth resistor R5. Otherwise, the third connection confirmation terminal of the charging circuit 300 is suspended.

In some embodiments, the control guide sub-circuit 111 further includes a mechanical switch SQ, and the mechanical switch SQ is connected to the first resistor R1 in series.

The mechanical switch SQ may be switched between on and off due to a manual operation. The mechanical switch SQ may be used to manually control whether to enable the charging/discharging circuit 100. A function principle of the mechanical switch SQ is the same as that of the temperature switch 120. For details, refer to related descriptions of the temperature switch 120 in the foregoing embodiment.

In some embodiments, the charging/discharging circuit 100 may further include a ground wire PE, and the second terminal of the fourth resistor R4 and the second terminal of the fifth resistor R5 are connected to the ground wire PE. When the charging/discharging circuit 100 is connected to the discharging circuit 200 and the charging circuit 300, the ground wire PE is separately connected to the ground terminal of the discharging circuit 200 and the ground terminal of the charging circuit 300.

In some embodiments, the connection circuit 110 includes a signal transmission sub-circuit 112. The signal transmission sub-circuit 112 is separately connected to signal transmission terminals of the discharging circuit 200 and the charging circuit 300, and is configured to transmit a communication signal to implement communication between the discharging circuit 200 and the charging circuit 300. The temperature switch 120 is disposed on the signal transmission sub-circuit 112, and is configured to control connection/disconnection of the signal transmission sub-circuit 112.

To ensure charging/discharging safety between the discharging circuit 200 and the charging circuit 300, the discharging circuit 200 and the charging circuit 300 communicate with each other through the signal transmission sub-circuit 112 during charging/discharging. The discharging circuit 200 discharges electricity when being capable of communicating with the charging circuit 300. The signal transmission sub-circuit 112 may implement CAN communication, 485 communication, or the like between the discharging circuit 200 and the charging circuit 300.

In some embodiments, the charging/discharging circuit 100 further includes a power transmission line. The discharging circuit 200 is connected to the charging circuit 300 through the power transmission line and the signal transmission sub-circuit 112. The discharging circuit 200 outputs electrical energy to the power transmission line when being capable of communicating with the charging circuit 300, and the electrical energy is transmitted to the charging circuit 300 through the power transmission line.

When the temperature switch 120 is turned on, the signal transmission sub-circuit 112 is connected, and the discharging circuit 200 normally discharges electricity. When the temperature switch 120 is turned off, the signal transmission sub-circuit 112 is disconnected, and the discharging circuit 200 stops discharging electricity because communication with the charging circuit 300 cannot be performed.

In some embodiments, the signal transmission sub-circuit 112 includes a plurality of CAN signal lines, and two ends are respectively connected to CAN signal transmission terminals of the discharging circuit 200 and the charging circuit 300. The temperature switch 120 is disposed on any one of the CAN signal lines.

In some embodiments, the signal transmission sub-circuit 112 includes CAN signal lines CAN-H and CAN-L, and the CAN signal transmission terminal includes S+ and S-. Two ends of CAN-L are connected to S+ terminals of the discharging circuit 200 and the charging circuit 300, and two ends of CAN-H are connected to S- terminals of the discharging circuit 200 and the charging circuit 300.

In this implementation, the temperature switch 120 may be disposed on CAN-L. After the temperature switch 120 is turned off, CAN communication cannot be performed between the discharging circuit 200 and the charging circuit 300. Certainly, the temperature switch 120 may alternatively be disposed on CAN-H.

In some embodiments, a power transmission line is connected between the discharging circuit 200 and the charging circuit 300. The power transmission line includes a positive line and a negative line, and a fuse FUSE is disposed on the positive line. The power transmission line is configured to transmit a direct current. Certainly, the power transmission line may alternatively use another structure or transmit an alternating current. This is not limited in this implementation.

In some embodiments, the discharging circuit 200 and the charging circuit 300 may be connected to the power transmission line through switching elements, and the first controller 210 and the first controller 310 respectively control the corresponding switching elements.

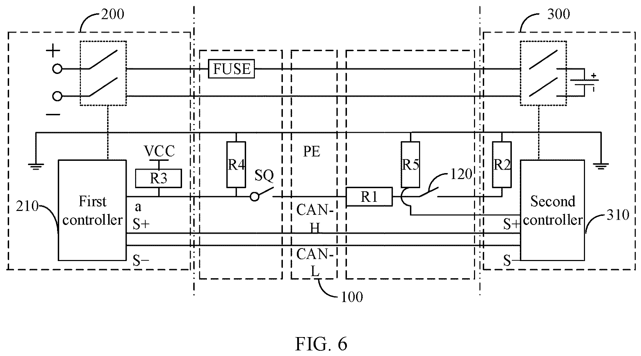

With reference to FIG. 6, an embodiment of this disclosure further provides a connection assembly. The connection assembly includes a cable 400, a first plug 500, and a second plug 600. Two ends of the cable 400 are respectively connected to the first plug 500 and the second plug 600 to form the charging/discharging circuit 100 according to any one of the foregoing embodiments. A temperature switch 120 is packaged into the first plug 500 or the second plug 600. The first plug 500 is plugged into a discharging device, and the second plug 600 is plugged into a charging device. The discharging device includes a discharging circuit 200, and the charging device includes a charging circuit 300.

When the first plug 500 is normally plugged into the discharging device, the charging/discharging circuit 100 is connected to the discharging circuit 200. When the second plug 600 is normally plugged into the charging device, the charging/discharging circuit 100 is connected to the charging circuit 300.

In some embodiments, a fourth resistor R4, a controlled switch SQ, and a fuse FUSE may be packaged into the first plug 500, and a first resistor R1, a fifth resistor R5, and a temperature switch 130 may be packaged into the second plug 600. For a specific principle and structure of the charging/discharging circuit 100, refer to the foregoing embodiments. Details are not described herein again in this implementation.

According to the connection assembly in this disclosure, the temperature switch 120 is disposed on a connection circuit 110, to automatically disconnect the connection circuit 110 when a charging temperature is excessively high, so as to stop transmission of electrical energy. Because only a small number of components are required for implementing the over-temperature protection function, there are relatively fewer failure points, and therefore the reliability of the over-temperature protection function is relatively high. Certainly, the connection assembly may use the technical solutions in the foregoing embodiments, and the connection assembly also has corresponding technical effects.

Still with reference to FIG. 6, an embodiment of this disclosure further provides a charging/discharging system, including a discharging vehicle, a charging vehicle, and the connection assembly according to the foregoing embodiment. The discharging vehicle includes a discharging circuit 200, and the discharging circuit 200 is connected to a charging/discharging circuit 100. The charging vehicle includes a charging circuit 300, and the charging circuit 300 is connected to the charging/discharging circuit 100.

The discharging circuit 200 includes a first controller 210, a detection terminal of the first controller 210 is connected to the charging/discharging circuit 100, and the first controller 210 is configured to: when the detection terminal is in a first state, control the discharging circuit 200 to discharge electricity externally; when the detection terminal is in a second state, control the discharging circuit 200 to stop discharging electricity externally; and when the detection terminal is in a third state, control the discharging circuit 200 to maintain a state of not discharging electricity externally. When the detection terminal is in the first state, a temperature switch is turned on. When the detection terminal is in the second state or the third state, the temperature switch is turned off.

According to the charging/discharging system in this disclosure, a voltage value of the detection terminal in the first state is less than a voltage value in the second state and the voltage value of the detection terminal in the second state is less than a voltage value in the third state. For example, the voltage value of the detection terminal in the first state is 7 V, the voltage value of the detection terminal in the second state is 9 V, and the voltage value of the detection terminal in the third state is 12 V. This embodiment constitutes no limitation.

In some embodiments, the detection terminal of the first controller 210 may be a port a, a port S+, or a port S-. When the port a is in the first state, or when a CAN signal is transmitted at the port S+ or the port S-, the first controller 210 controls the discharging circuit 200 to discharge electricity. For details, refer to the foregoing embodiments.

According to the charging/discharging system in this disclosure, the temperature switch 120 is disposed on a connection circuit 110, to automatically disconnect the connection circuit 110 when a charging temperature is excessively high, so as to stop transmission of electrical energy. Because only a small number of components are required for implementing the over-temperature protection function, there are relatively fewer failure points, and therefore the reliability of the over-temperature protection function is relatively high. Certainly, the charging/discharging system may use the technical solutions in the foregoing embodiments, and the charging/discharging system also has corresponding technical effects.

The terms "first", "second", and the like in the specification and the claims of this disclosure are used to distinguish between similar objects, and are not used to describe a specific sequence or order. It should be understood that data used in such a manner is interchangeable in a proper case, so that embodiments of this disclosure can be implemented in a sequence other than those shown or described herein. In addition, objects distinguished by "first", "second", and the like are usually of a same type, and a quantity of objects is not limited. For example, there may be one or more first objects. In addition, in the specification and claims, "and/or" represents at least one of the connected objects, and the character "/" usually represents an "or" relationship between associated objects.

In the descriptions of this specification, descriptions of reference to terms such as "an embodiment", "some embodiments", "an example embodiment", "an example", "a specific example", or "some examples" mean that specific features, structures, materials, or characteristics described with reference to the embodiment or example are included in at least one embodiment or example of this disclosure. In this specification, illustrative descriptions of the foregoing terms do not necessarily refer to a same embodiment or example. In addition, the described specific features, structures, materials, or characteristics may be combined in a proper manner in any one or more embodiments or examples.

Although the embodiments of this disclosure are shown and described, a person of ordinary skill in the art may understand that various changes, modifications, replacements, and variations may be made to these embodiments without departing from the principles and objectives of this disclosure, and the scope of this disclosure is defined by the claims and equivalents thereof.

## Claims

1. A charging/discharging circuit (100), comprising:
a connection circuit (110), separately connected to a discharging circuit (200) and a charging circuit (300), and configured to transmit electrical energy in a state in which the discharging circuit (200) and the charging circuit (300) are connected; and
a temperature switch (120), disposed on the connection circuit (110), and configured to disconnect or connect the connection circuit (110) based on a temperature.

2. The charging/discharging circuit (100) according to claim 1, wherein the connection circuit (110) comprises:
a control guide sub-circuit (111), configured to be separately connected to connection confirmation terminals of the discharging circuit (200) and the charging circuit (300), to determine whether the charging circuit (300) and the discharging circuit (200) are connected; and
the temperature switch (120) is disposed on the control guide sub-circuit (111), and is configured to control connection/disconnection of the control guide sub-circuit (111).

3. The charging/discharging circuit (100) according to claim 2, wherein the control guide sub-circuit (111) comprises:
a first resistor, wherein a first terminal of the first resistor is connected to a first connection confirmation terminal of the charging circuit (300), and a second terminal of the first resistor is connected to a second connection confirmation terminal of the discharging circuit (200);
the temperature switch (120) is connected to the first resistor in series; and
the first connection confirmation terminal of the charging circuit (300) is connected to a ground terminal of the charging circuit (300) through a second resistor, and the second connection confirmation terminal of the discharging circuit (200) is connected to a pull-up power supply of the discharging circuit (200) through a third resistor.

4. The charging/discharging circuit (100) according to claim 3, wherein the control guide sub-circuit (111) further comprises:
a fourth resistor, wherein a first terminal of the fourth resistor is connected to the second connection confirmation terminal of the discharging circuit (200), and a second terminal of the fourth resistor is connected to a ground terminal of the discharging circuit (200).

5. The charging/discharging circuit (100) according to claim 3, wherein the control guide sub-circuit (111) further comprises:
a fifth resistor, wherein a first terminal of the fifth resistor is connected to a third connection confirmation terminal of the charging circuit (300), and a second terminal of the fifth resistor is connected to the ground terminal of the charging circuit (300).

6. The charging/discharging circuit (100) according to claim 3, wherein the control guide sub-circuit (111) further comprises:
a mechanical switch, connected to the first resistor in series.

7. The charging/discharging circuit (100) according to claim 1, wherein the connection circuit (110) comprises:
a signal transmission sub-circuit (112), separately connected to signal transmission terminals of the discharging circuit (200) and the charging circuit (300), and configured to transmit a communication signal to implement communication between the discharging circuit (200) and the charging circuit (300); and
the temperature switch (120) is disposed on the signal transmission sub-circuit (112), and is configured to control connection/disconnection of the signal transmission sub-circuit (112).

8. The charging/discharging circuit (100) according to claim 7, wherein the signal transmission sub-circuit (112) comprises:
a plurality of CAN signal lines, wherein two ends are respectively connected to CAN signal transmission terminals of the discharging circuit (200) and the charging circuit (300); and
the temperature switch (120) is disposed on any one of the CAN signal lines.

9. A connection assembly, wherein the connection assembly comprises a cable (400), a first plug (500), and a second plug (600), two ends of the cable (400) are respectively connected to the first plug (500) and the second plug (600) to form the charging/discharging circuit (100) according to any one of claims 1 to 8, a temperature switch (120) is packaged into the first plug (500) or the second plug (600), the first plug (500) is plugged into a discharging device, and the second plug (600) is plugged into a charging device; and
the discharging device comprises a discharging circuit (200), and the charging device comprises a charging circuit (300).

10. A charging/discharging system, comprising a discharging vehicle, a charging vehicle, and the connection assembly according to claim 9, wherein the discharging vehicle comprises a discharging circuit (200), the discharging circuit (200) is connected to a charging/discharging circuit (100), the charging vehicle comprises a charging circuit (300), and the charging circuit (300) is connected to the charging/discharging circuit (100).

11. The charging/discharging system according to claim 10, wherein the discharging circuit (200) comprises a controller, a detection terminal of the controller is connected to the charging/discharging circuit (100), and the controller is configured to:
when the detection terminal is in a first state, control the discharging circuit (200) to discharge electricity externally;
when the detection terminal is in a second state, control the discharging circuit (200) to stop discharging electricity externally; and
when the detection terminal is in a third state, control the discharging circuit (200) to maintain a state of not discharging electricity externally; and
when the detection terminal is in the first state, a temperature switch (120) is turned on, and when the detection terminal is in the second state or the third state, the temperature switch (120) is turned off.

12. The charging/discharging system according to claim 11, wherein a voltage value of the detection terminal in the first state is less than a voltage value in the second state, and the voltage value of the detection terminal in the second state is less than a voltage value in the third state.
